# EUROPEAN PATENT SPECIFICATION

(11) **EP 1 913 291 B1**
(45) Date of publication and mention of the grant of the patent: **17.11.2010**
(21) Application number: 05769179.2
(22) Date of filing: 27.07.2005
(51) Int. Cl.: F16H 61/662, F16H 61/00

(54) **METHOD FOR OPERATING A CONTINUOUSLY VARIABLE TRANSMISSION**
VERFAHREN ZUR BETÄTIGUNG EINES STUFENLOSEN GETRIEBES
PROCEDE DE COMMANDE D'UNE TRANSMISSION A VARIATION CONTINUE

(43) Date of publication of application: 23.04.2008
(73) Proprietor: ROBERT BOSCH GMBH, 70442 Stuttgart (DE)
(72) Inventor: VERSCHEIJDEN, Robert, NL-6002 TM Weert (NL); VAN WIJK, Wilhelmus, Johannes, Maria, NL-5071 AN Udenhout (NL); VAN DER SLUIS, Francis, Maria, Antonius, NL-5271 HP Sint-Michielsgestel (NL)
(74) Representative: Plevier, Gabriel Anton Johan Maria
(86) International application number: PCT/NL2005/000549
(87) International publication number: WO 2007/013792

(56) References cited:
- EP-A- 0 841 504
- EP-A- 1 217 266
- DE-A1- 4 410 311
- US-A1- 2005 059 528
- US-B1- 6 299 564

## Description

The present invention relates to a method for operating a continuously variable transmission, more in particular an electro-hydraulic control device thereof, as defined in the preamble of the following claim 1.

Such a transmission and control device are generally known, for example from the United States patent US-6,537,176. The known continuously variable transmission includes a primary or drive pulley and a secondary or driven pulley, as well as an endless transmission element, which may be one of several known types, wrapped around and in frictional contact with the said pulleys. The transmission provides a transmission speed ratio between the primary and secondary pulleys that may be controlled to an arbitrary value within a range of speed ratios covered by the transmission through an appropriate actuation thereof by means of an electro-hydraulic control device of the transmission.

The known control device includes two pressure chambers, each associated with a respective pulley for effecting a respective clamping force on the endless transmission element. Further, the control device includes means for realising, in a controlled manner, a pressure level in the pressure chamber associated with the primary pulley, which pressure level is denoted the primary pressure hereinafter, and for realising, also in a controlled manner, a pressure level in the pressure chamber associated with the secondary pulley, which pressure level is denoted the secondary pressure hereinafter. Several basic hydraulic layouts of the control device are known for this purpose, however, the present invention specifically relates to a layout comprising at least the following components:
- a hydraulic pump for supplying a flow of fluid to a main hydraulic line,
- an adjustable line pressure valve capable of controlling the fluid pressure in the main hydraulic line to a desired level, which pressure level is denoted the line pressure hereinafter,
- an adjustable primary pressure valve, interposed between the main hydraulic line and a primary hydraulic branch connected to the pressure chamber associated with the primary pulley and capable of controlling the primary pressure between a first minimum pressure level and the line pressure,
- an adjustable secondary pressure valve, interposed between the main hydraulic line and a secondary hydraulic branch connected to the pressure chamber associated with the secondary pulley and capable of controlling the secondary pressure in-between a second minimum pressure level and the line pressure, and
- valve control means for determining desired values for all of the line pressure, the primary pressure and the secondary pressure and for adjusting the said valves to control the respective actually prevailing pressure to coincide with the respectively desired value.

It is common practice to include a feedback loop in the valve control means to improve the accuracy of the device. Such feedback loop comprises a pressure sensor for measuring an actually prevailing fluid pressure, which information is used to (fine) adjust an respectively associated valve so as to effect that the actual pressure accurately coincides with the relevant desired pressure.

In the above hydraulic layout of the known control device the valve control means generate desired values for all of the line pressure, the primary pressure and the secondary pressure. Hereby, the desired line pressure is determined by the valve control means to be higher than the highest of the primary and the secondary pressure levels by a certain margin, so as to reliably ensure that both the primary and the secondary pressure level may be derived from the line pressure level by the primary and the secondary pressure valves. This latter condition, however, adversely affects the manufacturing cost and the operational efficiency of the control means, e.g. by the higher maximum pressure capacity that is required for the pump and leakage of hydraulic fluid due to the relatively high level of the line pressure. Moreover, because both the primary and the secondary pressure level are effectively controlled by two pressure control valves placed in series (i.e. the line pressure valve and the primary or the secondary pressure valve respectively), the pressure response of this type of control device comparatively slow.

Further, from the generic patent application publication US2005/0059528 A1 it is known to set at least one of the primary pressure valve or the secondary pressure valve in a fully opened condition, i.e. at least virtually providing an unrestricted opening between the main hydraulic line and the respective hydraulic branch, when the respective pressure level that is controlled by the said one valve is higher than the pressure level in the respective other hydraulic branch. At the same time the desired line pressure is determined by the valve control means to be equal to the said respective pressure level, such that, effectively, the line pressure valve controls the said respective pressure level.

It is remarked that such valve condition providing a virtually unrestricted opening of the valve may alternatively be defined by its intended effect, i.e. a valve condition wherein a pressure drop over the valve between the main line and the respective hydraulic branch is negligible.

By applying the above method and at least when the line pressure valve is used for controlling the said respective pressure level, only two valves, i.e. the line pressure valve and one of the primary and secondary pressure valves, are actively controlled by the valve control means, the third valve being held in the above specified condition.

The invention will now be elucidated along a drawing in which:
Figure 1 is a diagrammatic representation of a control device as a part of a schematically depicted continuously variable transmission that is to be actuated thereby;
Figure 2 provides a simplified schematic representation of a known embodiment of the valve control means used as part of the control device for controlling the adjustable valves thereof;
Figure 3 is a graph that illustrates possible pressure set-points determined by the valve control means when operated in a conventional manner;
Figure 4 diagrammatically illustrates a first possible embodiment of the valve control means in accordance with the present invention;
Figure 5 is a graph that illustrates possible pressure set-points determined by the valve control means when operated in accordance with a first embodiment of the method according to the invention;
Figure 6 diagrammatically illustrates a second possible embodiment of the valve control means in accordance with the present invention;
Figure 7 is a graph that illustrates possible pressure set-points determined by the valve control means when operated in accordance with a second embodiment of the method according to the invention;
Figure 8 is a graph that illustrates possible pressure set-points determined by the valve control means when operated in accordance with a third embodiment of the method according to the invention;
Figure 9 is a diagrammatic representation of an embodiment of the control device that is particularly suited to be operated in accordance with the method according to the invention.
and changing a transmission speed ratio between an input or primary shaft 2 and an output or secondary shaft 3 of the transmission 1, which comprises a control device for the actuation of the transmission 1 including any auxiliary functions thereof. Such auxiliary functions are schematically indicated as the hydraulic users U1, U2, which may, for instance, represent a clutch or a lubrication point of the transmission 1. The transmission 1 is intended to be incorporated between an engine E and a load L, for example in a motor vehicle, for varying the transmission speed ratio there between within a continuous range of possible ratios.

The transmission 1 further comprises an endless flexible belt 4 that is wrapped around and between a primary pulley 5 placed on the primary shaft 2 and secondary pulley 6 placed on the secondary shaft 3. The belt 4 is frictionally engaged with the pulley discs of the respective pulleys 5, 6 by means of clamping forces, respectively generated by a hydraulic pressure exerted in a primary pressure chamber 7 associated with an axially moveable disc of the primary pulley 5, i.e. the primary pressure Ppri, and by a hydraulic pressure exerted in a secondary pressure chamber 8 associated with an axially moveable disc of the secondary pulley 6, i.e. the secondary pressure Psec.

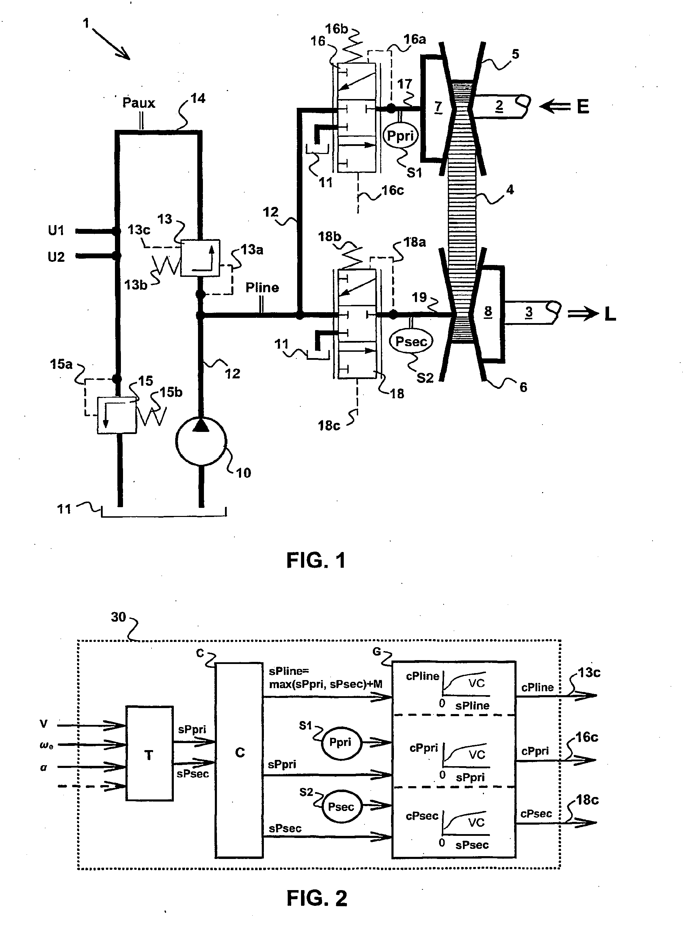

These pressures Ppri, Psec realised by the control device that, to this end, comprises a pump 10, which is normally driven directly and continuously by the engine E and which supplies a flow of pressurised hydraulic medium to a main hydraulic line 12 of the control device. Hereby such medium is drawn from a reservoir 11 for hydraulic medium, alternatively denoted oil sump 11. The pressure level in this main line 12, i.e. the line pressure Pline, is controlled by an adjustable line pressure valve 13. The line pressure valve 13 is provided with generally known valve biasing means, which in this example include a line pressure feedback line 13a, a spring 13b and a line pressure control line 13c. By means of a valve control means 30 of the control device (see figure 2) a suitable line pressure control pressure cPline is generated in the line pressure control line 13c, so that, in turn, a line pressure set-point sPline, i.e. a desired level sPline for the line pressure Pline, is actually realised by the line pressure valve 13 in the main line 12.

The line pressure valve 13 discharges a surplus of the pump flow into an auxiliary hydraulic line 14 from which the auxiliary hydraulic users U1, U2 of the transmission 1 are supplied with hydraulic medium. The pressure level in this auxiliary line 14, i.e. the auxiliary pressure Paux, is controlled by an auxiliary pressure valve 15, usually to a fixed, relatively low pressure level of a few (e.g. 5) bar. To this end, the auxiliary pressure valve 15 is provided with an auxiliary pressure feedback line 15a and a spring 15b. In the embodiment of the control device shown, the auxiliary pressure valve 15 discharges a remaining surplus of the pump flow directly into the oil sump 11.

The primary pressure Ppri can be controlled by means of an adjustable further or primary pressure valve 16 that is interposed between the main line 12 and a primary hydraulic branch 17 connected to the primary pressure chamber 7. The primary pressure valve 16 is capable of controlling the primary pressure Ppri by selectively allowing the primary pressure chamber 7 to communicate with the main line 12 for increasing the primary pressure Ppri, or with the oil sump 11 for relieving the primary pressure Ppri. The primary pressure valve 16 is provided with generally known valve biasing means, which in this example include a primary pressure feedback line 16a, a spring 16b and a primary pressure control line 16c. By means of the valve control means 30 (see figure 2) a suitable primary pressure control pressure cPpri is generated in the primary pressure control line 16c, so that, in turn, a primary pressure set-point sPpri, i.e. a desired level sPpri for the primary pressure Ppri, is actually realised by the primary pressure valve 16 in the primary branch 17.

The secondary pressure Psec is controlled in an analogous manner by means of yet a further adjustable or secondary pressure valve 18 that is interposed between the main line 12 and a secondary hydraulic branch 19 connected to the secondary pressure chamber 8. The secondary pressure valve 18 is capable of controlling the secondary pressure Psec by selectively allowing the secondary pressure chamber 8 to communicate with the main line 12 for increasing the secondary pressure Psec, or with the oil sump 11 for relieving the secondary pressure Ppri. The secondary pressure valve 18 is provided with generally known valve biasing means, which in this example include a secondary pressure feedback line 18a, a spring 18b and a secondary pressure control line 18c. By means of the valve control means 30 (see figure 2) a suitable secondary pressure control pressure cPsec is generated in the secondary pressure control line 18c, so that, in turn, a secondary pressure set-point sPsec, i.e. a desired level sPsec for the secondary pressure Psec, is actually realised by the secondary pressure valve 18 in the secondary branch 19.

In figure 2 a simplified schematic representation of a known embodiment of the valve control means 30 is provided. The valve control means 30 use as an input one or more of several transmission control parameters known for this purpose, such as the current vehicle speed V, the current engine speed ωₑ and an accelerator pedal depression α. From these control parameters a primary pressure set-point sPpri and a secondary pressure set-point sPsec are determined, e.g. by means of a look-up table T or a mathematical model of the drive-line. The line pressure set-point sPline is then determined in block C by increasing the instantaneously highest of the primary and secondary pressure set-points sPpri, sPsec by a certain margin M, usually of a few bar. Subsequently, in block G the valve control means 30 generate respective control pressures cPline, cPpri and cPsec in the respective control lines 13c, 16c and 18c that are suitable for controlling the respective pressure levels Ppri, Psec and Pline towards the said pressure set-points sPpri, sPsec and sPline.

Such a control pressure may, for example, be determined by the valve control means via pre-programmed valve characteristic VC of the respective valve, which characteristic links each possible pressure level set-point to a specific level of the respective control pressure, as is indicated in block G of figure 2. Possibly, this type of valve control may also incorporate a feedback loop comprising a pressure sensor S1, S2 for measuring a respectively actually prevailing pressure level, as is indicated in block G for the line pressure valve 13 and the secondary pressure valve 18. By such feedback loop the respectively controlled pressure may be realised more accurately and changes therein may be rapidly realised.

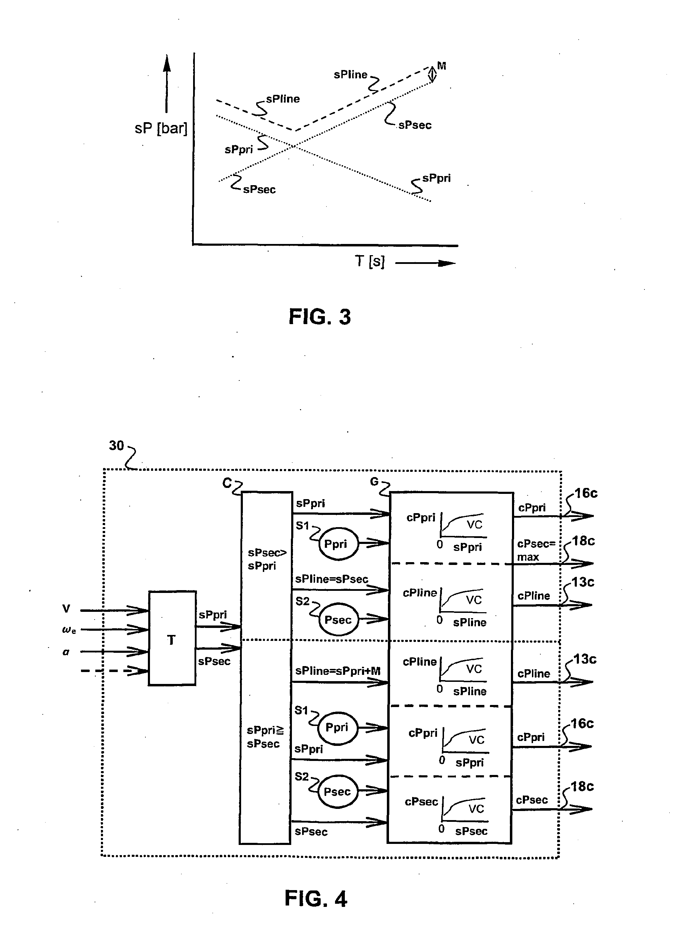

Figure 3 is a graph that illustrates the pressure levels in the control device when operated in accordance with the above conventional method. In figure 3 on the horizontal axis a time lapse T is indicated in seconds, whereas the vertical axis represent the level of the set-point sP for the respectively plotted system pressures, i.e. the line pressure set-point sPline, the primary pressure set-point sPpri and the secondary pressure set-point sPsec. Hereby, the dotted lines indicate a possible, i.e. exemplary, course of the primary pressure set-point sPpri and the secondary pressure set-point sPsec in relation to the lapse of time T. The conventionally applied line pressure set-point sPline is represented by the dashed line and, as explained in the above, corresponds to the instantaneously highest of the primary and secondary pressure set-points sPpri or sPsec increased by the said margin M.

Of course all of these lines of figure 3 merely serve as an example of the respective pressure set-point levels sPpri, sPsec and sPline that are determined by and vary in dependence on the instantaneous transmission control parameters.

According to the invention the above-described method for operating a continuously variable transmission is sub-optimal because of the said margin M that is applied to the line pressure Pline. This additional pressure margin M adversely affects the operational efficiency of the control means, e.g. by the higher maximum pressure capacity that is required for the pump 10 and leakage of hydraulic fluid from the control device. Moreover, because both the primary pressure Ppri and the secondary pressure Psec are effectively controlled by the line pressure valve 13 and a respective pressure valve 16, 18 placed in series, the pressure response of this type of control device potentially unstable, at least comparatively difficult to control.

Accordingly, the present invention provides for a first improved method for operating a continuously variable transmission that is described hereunder with reference to figure 4.

In this particular method according to the invention the line pressure set-point sPline is determined by the valve control means 30 to be equal to, for example, the secondary pressure set-point sPsec when the latter is higher than the primary pressure set-point sPpri, and the secondary pressure valve 18 is set in a condition providing an at least virtually unrestricted opening between the main hydraulic line 12 and the secondary branch 19. In this example such is effected by the valve control means 30 generating the maximum level of the control pressure cPsec=max that is associated with the secondary pressure valve 18.

Thus, effectively, by applying the method according to the invention and when the secondary pressure Psec is higher than the primary pressure Ppri, only the line pressure valve 13 and the primary pressure valve 16 are actively controlled by the valve control means 30, the secondary pressure valve 18 being held in the said fully opened condition. Hereby, the two valves 13 and 16 that are actively controlled may each be controlled favourably accurately by a feedback loop and pertaining pressure sensor S1, S2. For this purpose these sensors S1 and S2 are associated with the primary branch 17 and the secondary branch 19 respectively. However, if only one pressure sensor S1 is available, it should be associated with the main line 12.

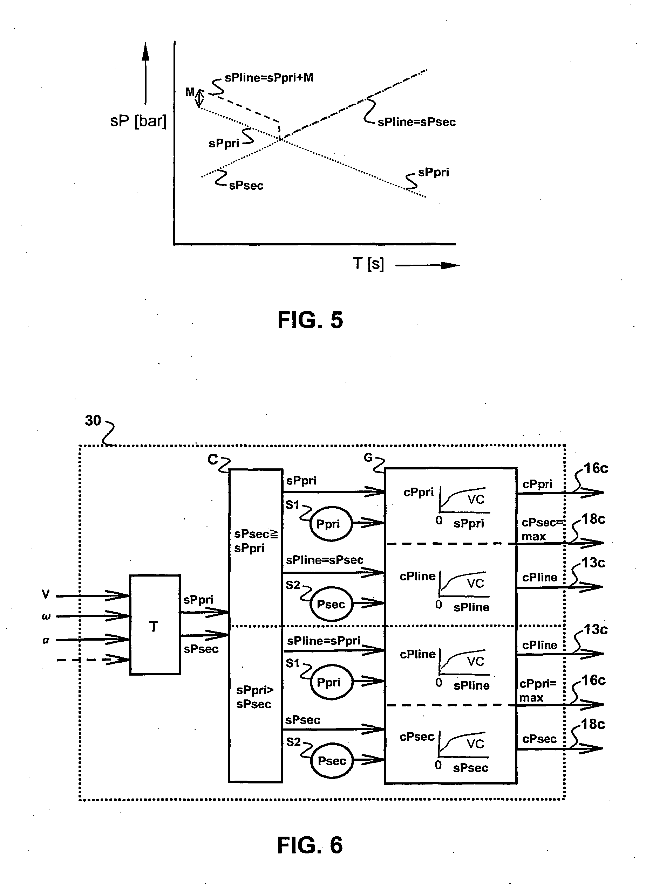

Figure 5 provides the same type of graph as figure 3, however, with the line pressure set-point sPline being controlled in accordance with the above first method according to the invention. The line pressure set-point sPline, which is again represented by the dashed line, thus corresponds to the conventionally applied line pressure set-point sPline indicated in figure 3 when the primary pressure set-point sPpri is higher than the secondary pressure set-point sPpri, i.e. is determined by increasing the primary pressure set-point sPpri by the said margin M. But, when the secondary pressure set-point sPsec is higher than the primary pressure set-point sPpri, the line pressure set-point sPline is made equal to this secondary pressure set-point sPsec, which provides a pressure reduction relative to the conventionally applied line pressure level set-point sPline indicated in figure 3. It may be self-evident that hereby energy is saved and leakage is reduced, whereby the transmission efficiency is improved accordingly. Moreover, since only the line pressure valve 13 is used for controlling the secondary pressure Psec -the secondary pressure valve 18 being held in fully opened condition-, a response of the actually prevailing level after a change in the pressure set-point is inherently more stable than in the conventional system.

In another or second development of the method according to the invention, which is described hereunder with reference to figure 6, the line pressure set-point sPline is determined by the valve control means 30 to be equal to the highest of both the primary pressure set-point sPpri and the secondary pressure set-point sPsec and the pressure valve 16, 18 that is respectively capable of controlling the said respectively highest pressure level Ppri or Psec is set in a condition providing an at least virtually unrestricted opening between the main hydraulic line 12 and the respective hydraulic branch 17, 19. In this example such is effected by the valve control means 30 generating the maximum level of the control pressure cP=max that is associated with the said pressure valve 16, 18 that is respectively capable of controlling the said respectively highest pressure level Ppri or Psec.

Thus, effectively, by applying this latter method according to the invention, only two valves, i.e. the line pressure valve 13 and one of the primary and secondary pressure valve 16 or 18, are actively controlled by the valve control means 30, the respective third valve 18 or 16 being held in the said fully opened condition. Hereby, the two valves that are actively controlled at any given instance, i.e. line pressure valve 13 and either the primary pressure valve 16 or the secondary pressure valve 18, may each be controlled favourably accurately by a feedback loop and pertaining pressure sensor S1, S2. For this purpose these sensors S1 and S2 are associated with the primary branch 17 and the secondary branch 19 respectively, whereby the feedback loop for line pressure valve 13 switches between these sensors S1 and S2 in dependence on which of the primary pressure Ppri and the secondary pressure Psec it corresponds with.

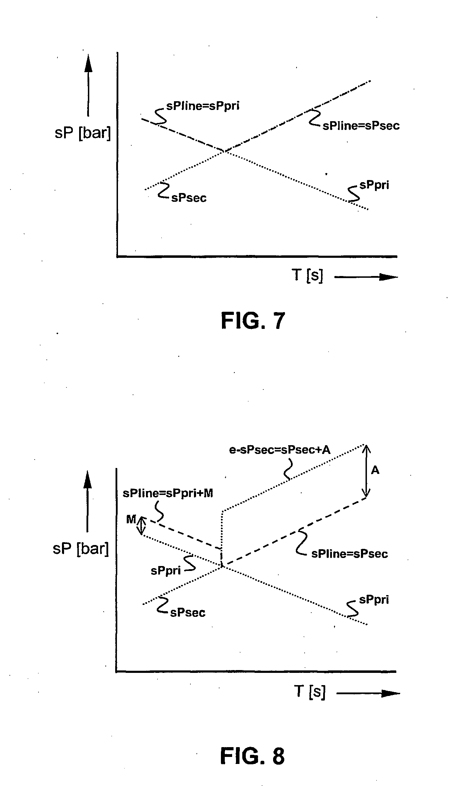

Figure 7 provides the same type of graph as figure 3, however, with the line pressure set-point sPline being controlled in accordance with the above second method according to the invention. The line pressure set-point sPline, which is represented by the dashed line, is defined by this latter method according to the present invention and is thus equal to the highest of the primary pressure set-point sPpri and the secondary pressure set-point sPsec. Again, this provides a pressure reduction relative to the conventionally applied level of the line pressure set-point sPline indicated in figure 3, however, in this case also when the primary pressure set-point sPpri is higher than the secondary pressure set-point sPsec. It may be self-evident that hereby even more energy is saved and leakage is reduced even further, whereby the transmission efficiency is improved accordingly. Moreover, since only the line pressure valve 13 is used for controlling the respectively highest of the primary pressure Ppri and the secondary pressure Psec -the respectively associated pressure valve 16, 18 being held in the fully opened condition-, a response of the actually prevailing level after a change in the pressure set-point may be faster than in the conventional system.

According to the invention, in a more detailed embodiment of the above second control method, it may be practical to return to the conventional control method when the primary pressure set-point sPpri and the secondary pressure set-point sPsec are about equal, so as to avoid instability of or interference between any of the respective pressure levels Pline, Ppri and Psec.

Further it is remarked that, in both of the above first and second control methods according to the invention, in stead of generating the maximum level of the control pressure cP=max to hold a respective pressure valve 16, 18 in the said fully opened condition, it is also possible to respectively generate a variable control pressure cP, i.e. that varies with the transmission control parameters, while still reliably maintaining the said fully opened condition. This has the advantageous effect that, when pressure control is switched back from the line pressure valve 13 to a respective valve 16, 18, only a slight and thus relatively fast change in valve condition is required, e.g. in terms of the required movement of a valve body relative to a valve housing. Such variable control pressures cP may be generated by the control means 30 according to the following steps of:
- determining a primary pressure set-point sPpri and a secondary pressure set-point sPsec based on the transmission control parameters;
- determining a line pressure set-point sPline to be equal to one of the primary pressure set-point sPpri and the secondary pressure set-point sPsec in accordance with either of the above first and second control method according to the invention;
- determining an elevated pressure set-point e-sP for such respective one pressure set-point sPpri or sPsec by increasing it by a pre-determined amount A;
- generating the respective control pressures cPline, cPpri, cPsec based on the line pressure set-point sPline, the respective one elevated pressure set-point e-sP and the respective other pressure set-point sP.

Figure 8 provides the same type of graph as figure 5, however, with the control means 30 being operated in accordance with the above method. In this illustrative example, the line pressure set-point sPline, which is again represented by the dashed line, is controlled in accordance with the above first method according to the invention. Thus the line pressure set-point sPline corresponds either to the primary pressure set-point sPpri increased by the margin M, i.e. when the primary pressure set-point sPpri is higher than the secondary pressure set-point sPsec, or to the secondary pressure set-point sPsec, i.e. when the secondary pressure set-point sPsec is higher than the primary pressure set-point sPpri. In this latter case and after the line pressure set-point sPline has been determined, the elevated pressure set-point e-sPsec is determined for the secondary pressure set-point sPsec by increasing it with the pre-determined amount A. Hereby, the amount A is determined to be large enough to ensure that the secondary pressure valve is reliably maintained in the fully opened condition. Subsequently, the said control pressures cPline, cPpri, cPsec are generated by the valve control means 30 respectively based on the line pressure set-point sPline, the primary pressure set-point sPpri and the elevated secondary pressure set-point e-sPsec.

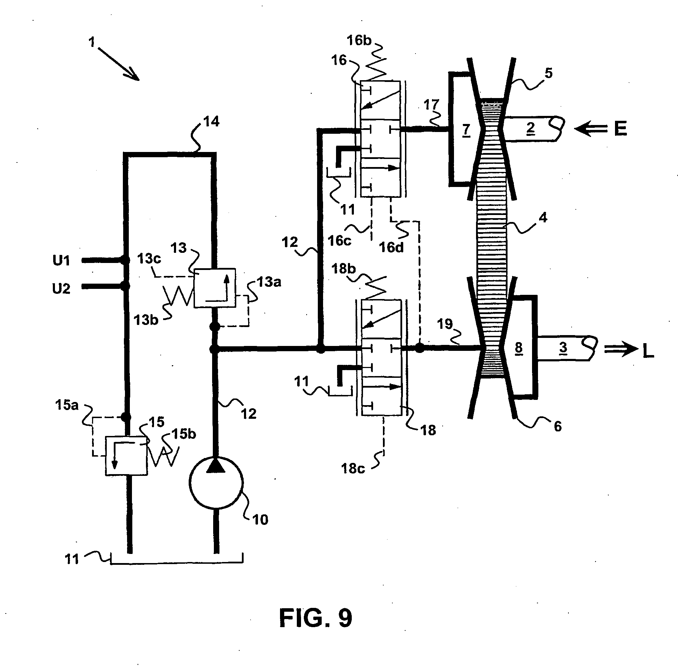

Figure 9 provides a diagrammatic representation of a continuously variable transmission 1 including its control device that is very similar to that of figure 1, which, however, includes two significant modifications that are highly advantageous to be applied, either separately or jointly, in combination with a control method according to the present invention, in particular the above explained first method.

Firstly, in figure 9, the valve biasing means of either one or both of the primary and the secondary pressure valves 16 and 18 do not include the respective pressure feedback lines 16a and 18a, such that it favourably functions as a so-called flow-control valve, which is comparatively simple to control and adjust by the valve control means 30. Secondly, the primary pressure valve 16 includes a secondary pressure Psec feedback line 16d. A similar feedback of the primary pressure Ppri could also be provided for the secondary pressure valve 18. The construction and advantages of this particular arrangement of the control device have been described in detail in the European patent application EP-A-1217266.

## Claims

1. Method for operating an electro-hydraulic control device of a continuously variable transmission (1) comprising a primary pulley (5), a secondary pulley (6) and an endless transmission element (4) provided there between, the device comprising:
- a hydraulic pump (10) for supplying a flow of fluid to a main hydraulic line (12),
- an adjustable line pressure valve (13) capable of controlling the fluid pressure (Pline) in the main hydraulic line (12) to a desired level (sPline),
- an adjustable primary pressure valve (16), interposed between the main hydraulic line (12) and a primary hydraulic branch (17) connected to a pressure chamber (7) associated with the primary pulley (5) and capable of controlling the fluid pressure (Ppri) in the primary pressure chamber (7) to a desired level (sPpri) between a first minimum pressure level and the line pressure (Pline),
- an adjustable secondary pressure valve (18), interposed between the main hydraulic line (12) and a secondary hydraulic branch (19) connected to a pressure chamber (8) associated with the secondary pulley (6) and capable of controlling the fluid pressure (Psec) in the secondary pressure chamber (9) to a desired level (sPsec) between a second minimum pressure level and the line pressure (Pline), and
- valve control means (30) for determining the desired levels (sPline, sPpri, sPsec) for all of the line pressure (Pline), the primary pressure (Ppri) and the secondary pressure (Psec) and for adjusting the respective valves (13, 16, 18) to control the respective fluid pressures (Pline, Ppri, Psec) to coincide with the respectively desired level (sPline, sPpri, sPsec), the method comprising the steps of:
- determining the desired line pressure (sPline) by means of the valve control means (30) to be equal to the highest of the desired primary pressure (sPpri) and the desired secondary pressure (sPsec), and
- adjusting the pressure valve (16; 18) that is respectively capable of controlling the said highest desired pressure level (sPpri; sPsec) by means of the valve control means (30) into a condition providing an at least virtually unrestricted opening between the main hydraulic line (12) and the respective hydraulic branch (17; 19),
**characterised in that** the primary pressure valve (16) and the secondary pressure valve (18) are provided with valve biasing means (16a-d; 18a-c) and **in that** the valve biasing means (16a-d) of the primary pressure valve (16) include a feedback line for the secondary pressure (Psec) or **in that** the valve biasing means (18a-c) of the secondary pressure valve (18) include a feedback line for the primary pressure (Psec).

2. Method according to claim 1, **characterised in that** at least when the primary pressure (Ppri) and the secondary pressure (Psec) are essentially equal the line pressure (Pline) is determined by means of the valve control means (30) by adding a safety margin (M) to the highest one of the desired primary pressure (sPpri) and the desired secondary pressure (sPsec).

3. Method according to claim 1 or 2, **characterised in that** the valve control means (30) is provided with two pressure sensors (S1, S2) that are respectively associated with the primary hydraulic branch (17) for measuring the actually prevailing primary pressure (Ppri) and with the secondary hydraulic branch (19) for measuring the actually prevailing secondary pressure (Psec).

4. Method according to claim 1 or 2, **characterised in that** the valve control means (30) is provided with only one pressure sensor (S1) that is associated with the main hydraulic line (12) for measuring the actually prevailing line pressure (Pline).

5. Method according to one the preceding claims, **characterised in that** the primary pressure valve (16) and/or the secondary pressure valve (18) is provided and functions as a flow control valve.

## Patentansprüche

1. Verfahren zum Betreiben einer elektrohydraulischen Steuervorrichtung eines kontinuierlich veränderlichen Getriebes (1), das eine primäre Riemenscheibe (5), eine sekundäre Riemenscheibe (6) und ein dazwischen vorgesehenes Endlos-Übertragungselement (4) aufweist, wobei die Vorrichtung enthält:
- eine Hydraulikpumpe (10), um eine Fluidströmung zu einer Haupthydraulikleitung (12) zu liefern,
- ein einstellbares Leitungsdruckventil (13), das den Fluiddruck (Pline) in der Haupthydraulikleitung (12) auf einen Sollpegel (sPline) steuern kann,
- ein einstellbares Primärdruckventil (16), das zwischen die Haupthydraulikleitung (12) und eine Primärhydraulikabzweigung (17), die mit einer der primären Riemenscheibe (5) zugeordneten Druckkammer (7) verbunden ist, eingefügt ist und den Fluiddruck (Ppri) in der primären Druckkammer (7) auf einen Sollpegel (sPpri) zwischen einem ersten minimalen Druckpegel und dem Leitungsdruck (Pline) steuern kann,
- ein einstellbares Sekundärdruckventil (18), das zwischen die Haupthydraulikleitung (12) und eine Sekundärhydraulikverzweigung (19), die mit einer der sekundären Riemenscheibe (6) zugeordneten Druckkammer (8) verbunden ist, eingefügt ist und den Fluiddruck (Psec) in der sekundären Druckkammer (9) auf einen Sollpegel (sPsec) zwischen einem zweiten minimalen Druckpegel und dem Leitungsdruck (Pline) steuern kann, und
- Ventilsteuermittel (30), um die Sollpegel (sPline, sPpri, sPsec) für den Leitungsdruck (Pline), den primären Druck (Ppri) und den sekundären Druck (Psec) zu bestimmen und um die jeweiligen Ventile (13, 16, 18) einzustellen, um die jeweiligen Fluiddrücke (Pline, Ppri, Psec) so zu steuern, dass sie mit dem jeweiligen Sollpegel (sPline, sPpri, sPsec) übereinstimmen, wobei das Verfahren die folgenden Schritte enthält:
- Bestimmen des Sollleitungsdrucks (sPline) mittels der Ventilsteuermittel (30), so dass er gleich dem Höchsten des Soll-Primärdrucks (sPpri) und des Soll-Sekundärdrucks (sPsec) ist, und
- Einstellen des Druckventils (16; 18), das jeweils den höchsten Solldruckpegel (sPpri; sPsec) mittels der Ventilsteuermittel (30) steuern kann, in einen Zustand, der eine zumindest virtuell unbeschränkte Öffnung zwischen der Haupthydraulikleitung (12) und der jeweiligen Hydraulikverzweigung (17; 19) schafft,
**dadurch gekennzeichnet, dass** das Primärdruckventil (16) und das Sekundärdruckventil (18) mit Ventilvorbelastungsmitteln (16a-d; 18a-c) versehen sind und dass die Ventilvorbelastungsmittel (16a-d) des Primärdruckventils (16) eine Rückkopplungsleitung für den Sekundärdruck (Psec) enthalten oder dass die Ventilvorbelastungsmittel (18a-c) des Sekundärdruckventils (18) eine Rückkopplungsleitung für den Primärdruck (Ppri) enthalten.

2. Verfahren nach Anspruch 1, **dadurch gekennzeichnet, dass** wenigstens dann, wenn der Primärdruck (Ppri) und der Sekundärdruck (Psec) im Wesentlichen gleich sind, der Leitungsdruck (Pline) mittels der Ventilsteuermittel (30) bestimmt wird, indem zu dem Höchsten des Soll-Primärdrucks (sPpri) und des Soll-Sekundärdrucks (sPsec) ein Sicherheitsbereich (M) addiert wird.

3. Verfahren nach Anspruch 1 oder 2, **dadurch gekennzeichnet, dass** die Ventilsteuermittel (30) mit zwei Drucksensoren (S1, S2) versehen sind, die der Primärhydraulikabzweigung (17), um den tatsächlich herrschenden Primärdruck (Ppri) zu messen, bzw. der Sekundärhydraulikabzweigung (19), um den tatsächlich herrschenden Sekundärdruck (Psec) zu messen, zugeordnet sind.

4. Verfahren nach Anspruch 1 oder 2, **dadurch gekennzeichnet, dass** die Ventilsteuermittel (30) mit nur einem Drucksensor (S1) versehen sind, der der Haupthydraulikleitung (12) zugeordnet ist, um den tatsächlich herrschenden Leitungsdruck (Pline) zu messen.

5. Verfahren nach einem der vorhergehenden Ansprüche, **dadurch gekennzeichnet, dass** das Primärdruckventil (16) und/oder das Sekundärdruckventil (18) als ein Strömungssteuerventil vorgesehen ist und entsprechend arbeitet.

## Revendications

1. Procédé de commande d'un dispositif de commande électro-hydraulique d'une transmission à variation continue (1) comprenant une poulie primaire (5), une poulie secondaire (6) et un élément de transmission sans fin (4) monté entre celles-ci, le dispositif comprenant :
- une pompe hydraulique (10) pour alimenter une circulation de fluide à une canalisation hydraulique principale (12),
- une soupape réglable de commande de pression de canalisation (13) capable de commander la pression de fluide (Pline) dans la canalisation hydraulique principale (12) à un niveau souhaité (sPline),
- une soupape réglable de commande de pression primaire (16), interposée entre la canalisation hydraulique principale (12) et un raccord hydraulique primaire (17) connecté à une chambre pression (7) associée à la poulie primaire (5) et capable de commander la pression de fluide (Ppri) dans la chambre de pression primaire (7) à un niveau souhaité (sPpri) compris entre un premier niveau minimum de pression et la pression de canalisation (Pline),
- une soupape réglable de commande de pression secondaire (18), interposée entre la canalisation hydraulique principale (12) et un raccord hydraulique secondaire (19) connecté à une chambre de pression (8) associée à la poulie secondaire (6) et capable de commander la pression de fluide (Psec) dans la chambre de pression secondaire (9) à un niveau souhaité (sPsec) compris entre un deuxième niveau minimum de pression et la pression de canalisation (Pline), et
- un moyen de commande de soupape (30) pour déterminer les niveaux souhaités (sPline, sPpri, sPsec) pour toutes les pressions, à savoir la pression de canalisation (Pline), la pression primaire (Ppri) et la pression secondaire (Psec) et pour régler les soupapes respectives (13, 16, 18) afin de commander les pressions de fluide respectives (Pline, Ppri, Psec) pour qu'elles correspondent aux niveaux souhaités respectivement (sPline, sPpri, sPsec), le procédé comprenant les étapes consistant à :
- déterminer la pression de canalisation souhaitée (sPline) par la voie du moyen de commande de soupape (30) pour que cette pression soit égale à la pression primaire souhaitée (sPpri) la plus élevée et à la pression secondaire souhaitée (sPsec) la plus élevée, et
- régler la soupape de commande de pression (16 ; 18) pour que celle-ci soit capable de commander respectivement ladite pression la plus élevée souhaitée (sPpri, sPsec) par la voie du moyen de commande soupape (30) à une condition produisant une ouverture pour le moins virtuellement sans restriction entre la canalisation hydraulique principale (12) et le raccord hydraulique respectif (17 ; 19),
**caractérisé en ce que** la soupape de commande de pression primaire (16) et la soupape de commande de pression secondaire (18) sont équipées de moyens de dérivation de soupape (16a-d ; 18a-c) et **en ce que** les moyens de dérivation de soupape (16a-d) de la soupape de commande de pression primaire (16) comprennent une canalisation de retour pour la pression secondaire (Psec) ou **en ce que** les moyens de dérivation de soupape (18a-c) de la soupape de commande de pression secondaire (18) comprennent une canalisation de retour pour la pression primaire (Ppri).

2. Procédé selon la revendication 1, **caractérisé en ce que**, pour le moins, quand la pression primaire (Ppri) et la pression secondaire (Psec) sont essentiellement égales, la pression de canalisation (Pline) soit déterminée par la voie du moyen de commande de soupape (30) en ajoutant une marge de sécurité (M) à la pression primaire (sPpri) la plus élevée souhaitée et à la pression secondaire (sPsec) la plus élevée souhaitée.

3. Procédé selon la revendication 1 ou la revendication 2, **caractérisé en ce que** le moyen de commande de soupape (30) est équipé de deux capteurs de pression (S1, S2) qui sont associées respectivement au raccord hydraulique primaire (17) pour mesurer la pression primaire (Ppri) vraiment prédominante et au raccord hydraulique secondaire (19) pour mesurer la pression secondaire (Psec) vraiment prédominante.

4. Procédé selon la revendication 1 ou la revendication 2, **caractérisé en ce que** le moyen de commande de soupape (30) est équipé d'un seul capteur de pression (S1) qui est associé à la canalisation hydraulique principale (12) pour mesurer la pression de canalisation (Pline) vraiment prédominante.

5. Procédé selon l'une quelconque des revendications précédentes, **caractérisé en ce que** la soupape de commande de pression primaire (16) et/ou la soupape de commande de pression secondaire (18) est(sont) montée(s) et agit(agissent) en tant que régulateur(s) de débit.
